# EUROPEAN PATENT SPECIFICATION

(11) **EP 2 913 958 B1**
(45) Date of publication and mention of the grant of the patent: **26.04.2017**
(21) Application number: 14290054.7
(22) Date of filing: 27.02.2014
(51) Int. Cl.: H04L 12/26

(54) **Preprocessing of network traces for temporal analysis**
Vorverarbeitung von Netzwerkverfolgung für zeitliche Analyse
Prétraitement de traces de réseau destiné à l'analyse temporelle

(43) Date of publication of application: 02.09.2015
(73) Proprietor: ALCATEL LUCENT, 92100 Boulogne-Billancourt (FR)
(72) Inventor: Forlivesi, Claudio, 2018 Antwerpen (BE); Kawsar, Fahim, 2018 Antwerpen (BE)
(74) Representative: ALU Antw Patent Attorneys

(56) References cited:
- EP-A1- 1 549 092
- WO-A1-2009/022199

## Description

### Field of the Invention

The invention relates to the field of analysis of network traces. A network trace is a collection of records generated by networking equipment that monitors a network. Every record of the trace corresponds to a packet that was intercepted by the monitoring equipment. Depending on the monitoring equipment, the packet may be intercepted at any of the OSI network layers. Besides a time field indicating when the record was generated, i.e., when the packet was intercepted by the monitoring network equipment, the record may further comprise other optional fields. These fields then comprise meta data about the intercepted packet such as for example but not limited to a source or destination IP or MAC address, a user identification such as the name of the sender of the packet, the length of the packet, the payload data of the packet itself and the application protocol.

In particular, the invention relates to the pre-processing of such a network trace before it is further processed by Big Data Analytics techniques such as the Map-Reduce tools or other cloud computing based data analysis techniques.

### Background of the Invention

MapReduce is a programming model for processing large data sets with a parallel, distributed algorithm on a cluster of computing devices. A MapReduce tool or program is composed of a Map procedure that performs filtering and sorting and a Reduce procedure that performs an aggregation operation. A system using the MapReduce programming model then orchestrates running the various tasks in parallel, managing all communications and data transfers between the various parts of the system, and providing for redundancy and fault tolerance.

A problem of the existing Map-Reduce analytics tools is that they are too generic, i.e., they have to be applicable to a wide area of data sets. More particularly, they do not possess a notion of time which is the primary property of the records in a network trace. This means that an entire class of problems cannot be addressed with the Map-Reduce analytics tools without the implementation of problem specific functionality on top the Map-Reduce analytics tools. Examples of such problems are determining or predicting optimal network resource allocation, analysing network performance and detecting network faults.

In the publication of Byungchul Park et al. "Fault detection in IP-based process control networks using data mining", Integrated Network Management, 2009. IM '09. IFIP/IEEE International Symposium, the use of data mining to provide fault-detection functionality to IP networks is proposed. The proposed solution is however heavily dependent on the use case at hand, i.e., network faults detection, so that it needs to be re-worked for different use-cases.

EP1549092 (A1) discloses a method comprising the following steps: a trace, representative of data traffic on a wireless communications network, is gathered and analysed; packets belonging to a particular data session and end-user are identified; time between packet arrivals in a session is determined; threshold value, representing a time between packet arrivals, is set; 'ON' periods of activity and 'OFF' periods of inactivity are determined, with consecutive packets arriving within the threshold value of time being grouped into a common 'ON' period of activity. The method characterizes data traffic with limited, easily obtainable information. The threshold value can be set to different values to highlight different network performance issues. The results of the analysis can be used to synthesise traffic for use in a network simulator.

WO2009022199 (A1) discloses a method of determining a representative frequency for data packets, each data packet having an associated time, the method comprising: receiving a sequence of time- differentials, wherein a time-differential represents a difference between the time associated with a corresponding first data packet and the time associated with a corresponding second data packet; and determining the representative frequency based on the steps of: grouping a predetermined number N of the time-differentials into one or more groups based on the magnitudes of the N time-differentials; selecting one or more of the one or more groups for use in determining a representative time-differential; determining the representative time- differential as a function of the time-differentials of the selected one or more groups; outputting an inverse of the representative time-differential as the representative frequency.

It is therefore an object to overcome the above problems and shortcomings and to provide a generic way of structuring network traces according to their temporal properties so that they are usable by common Big Data Analytics tools such as Map-Reduce without much further customization depending on the use case at hand.

### Summary of the Invention

In a first aspect, this object is achieved by a system for clustering a plurality of subsequent records of a network trace. These records comprising a time field storing a time stamp. The system is further configured to perform the following steps:
- Group the records into a sequence of bursts. The difference between the time stamp of two subsequent records within a burst is no more than a predetermined time difference T1. The difference between the time stamp of two subsequent records of subsequent bursts is equal to or more than the predetermined time difference T1.
- Group these bursts into a sequence of sessions. The difference between the time stamp of two subsequent records belonging to subsequent bursts of a same session is then no more than a predetermined time difference T2. The difference between the time stamp of subsequent records belonging to subsequent bursts of subsequent sessions is then equal to or more than this predetermined time difference T2.
T2 is further greater or equal to T1; The records further comprise a first meta field storing a value of a first type of meta-information. The system is then further configured to perform the following steps:
- Splitting a first burst belonging to a first session into sub-bursts according to the value of this first type of meta-information.
- Promoting such a sub-burst of sub-bursts to a promoted session if a time difference between the time stamp of a first and last record of the sub-burst is greater than a predetermined time difference T4.
- If by the promoting within the first session a time difference between a last record in a first sub-burst and a first record of a second subsequent sub-burst is greater than the predetermined time difference T2, then splitting this first session thereby obtaining two new subsequent sessions.

In other words, the records of the network trace are clustered in bursts and sessions. Each record is assigned to a single burst and each burst on its turn is assigned to a single session. This assigning and thus clustering is based on the time field and thus the time property of the records. By choosing the time differences T1 and T2 appropriately according to the use case, the clustering can be customized while using the same system and same steps.

In a typical data network, networking nodes or devices communicate with each other within a networking session. During communication in a session, several packets may be further exchanged in bursts. The above system allows reconstructing these bursts and sessions based on the time fields in the records of the network trace.

For example, the individual records in a network trace may identify the different HTTP request and responses that are generated by a user via a browser application. Whenever the user clicks on a link on a website, a number of HTTP requests and responses are generated in a short time, each HTTP request for each element of the new web page that is being loaded. Therefore, identifying different bursts of network activity may identify different clicks in the traffic. Also, bursts and therefore clicks that happen close enough in time may be used to represent a browsing session of a user. Therefore grouping bursts together in time identify these browsing sessions. In other words, the grouping in bursts and sessions reconstructs the network activity in terms of network events rather than packets and frames, i.e., records, just being sent over the network.

Within a burst, the distance between subsequent records is no more than the predefined time difference T1. A burst can thus be seen as a single network activity in the network trace. This single activity has then taken place by several packets that were detected on the monitored network, i.e., by records in the network trace. A session is then defined by a sequence of network activity and thus bursts where the bursts are never more than the predefined time difference T2 spaced apart.

After the clustering in bursts and sessions, Big Data Analytics or temporal analysis in general may then be performed on the bursts and sessions rather than on the individual records by for example Map-Reduce tools. As the clustering in time is already performed by the system, no further customized time field processing and thus use-case specific adaptation is further needed. Moreover, it is a further advantage that the data set is reduced by the clustering.

This allows further differentiating the bursts and sessions on the basis of the meta-data in the records. This way, parallel bursts may be created each indicative for a separate network activity on the monitored network defined by this first type of meta-data. One example of such a first type of meta-data is user information, a user ID or user identification. By splitting the bursts based on this user information, network activity and thus bursts are defined by the user that was participating to the intercepted communication. By this splitting, the first session may no longer fall under the condition that the bursts therein are no further apart than the predetermined time difference T2. Therefore, the first session may further be split in two new subsequent sessions where bursts are further apart than this time difference T2, i.e., where the last record of a first burst is further apart from the first record in time in a subsequent burst than this time difference T2.

It should further be noted that "a first burst" and "a first session" does not necessarily refer to the first burst and session in time but may refer to any burst and session. It is further preferred that the steps according to the embodiment above are performed for all the bursts in the network trace.

It is thus an advantage that different parallel sessions each comprising bursts of network activity may be identified. These may for example be sessions between different users or between different applications.

According to a further embodiment, the system is further configured to perform the following steps:
- Characterize the first and promoted session by a predominant value of the first type of meta-information stored in records of each respective session.
- Merge the promoted session with another session of said sessions if said promoted session and said another session are overlapping in time and are characterized by a same predominant value of said first type of meta-information.

In other words, not only are the records clustered in sessions and bursts, the sessions are also assigned a value of a type of meta-information according to the values of the records in the respective sessions. This way, sessions and bursts can have other properties besides their intrinsic properties related to the time differences T1 and T2. It is thus an advantage that, when performing Big Data Analytics on the bursts and sessions, that properties based on meta-information can be taken into account without the need to inspect the individual records within the network trace and thus within the sessions or even without further including the individual records.

If by the characterization parallel time-overlapping sessions created by the promoting are characterized by the same value of the first type of meta-information, the sessions are merged into a single session. The result is thus parallel sequences of sessions whereby each sequence of sessions is characterized by the same value of the first type of meta-information.

Later temporal analysis performed on the network trace may then be conducted on the basis of these parallel sessions each characterized by their respective value for a certain meta-information or thus by a label assigned by the characterization.

Optionally, the system may further be configured to perform the following step:
- If a short sub-burst of the sub-bursts comprises a time difference between a first and last record of the short sub-burst smaller than a predetermined time difference T3, then eliminate this short sub-burst.

The short sub-burst and all the records contained therein are thus removed from the network trace. This allows reducing the data set that for performing the later Big Data Analytics. By specifying the time difference T3, bursts that are related to insignificant network activity are thus no longer considered.

Also optionally, the records may further comprise a second meta field storing a value of a second type of meta-information. The system is then further configured to perform the following step:
- Remove undesired records from the network trace identified by the second type of meta-information.

Again, this allows reducing the data set further, but instead of basing it on the length of a burst T3, it is now based on a second type of meta-information comprised in the records. Advantageously, this removing is performed before the other steps, i.e., before the clustering in bursts and records, as a first filtering step.

A further option to reduce the size of the data set and thus the size of the network trace, is by removing fields from the records. In this case, the records further comprise a third meta field storing a value of a third type of meta-information. The system is then further configured to perform the following step:
- Remove this third meta field from all of the records.

In a second aspect, the invention relates to a method for clustering a plurality of subsequent records of a network trace. These records comprise a time field storing a time stamp. The method then comprises the following steps:
- Grouping the records into a sequence of bursts. A difference in the time stamp of two subsequent records within a burst is no more than a predetermined time difference T1. A difference in time stamp of two subsequent records between subsequent bursts is equal or more than this predetermined time difference T1.
- Grouping the bursts into a sequence of sessions. A difference between the time stamp of two subsequent records belonging to subsequent bursts of a same session is no more than a predetermined time difference T2. A difference between the time stamp of subsequent records belonging to subsequent bursts of subsequent sessions is equal or more than this predetermined time difference T2.
T2 is also greater or equal to T1. The records further comprise a first meta field storing a value of a first type of meta-information. The system is then further configured to perform the following steps:
- Splitting a first burst belonging to a first session into sub-bursts according to the value of this first type of meta-information.
- Promoting such a sub-burst of sub-bursts to a promoted session if a time difference between the time stamp of a first and last record of the sub-burst is greater than a predetermined time difference T4.
- If by the promoting within the first session a time difference between a last record in a first sub-burst and a first record of a second subsequent sub-burst is greater than the predetermined time difference T2, then splitting this first session thereby obtaining two new subsequent sessions.

In a third aspect, the invention relates to a computer program product comprising computer-executable instructions for performing the method according to the second aspect when the program is run on a computer.

In a fourth aspect, the invention relates to a computer readable storage medium comprising the computer program product according to the third aspect.

In a fifth aspect, the invention relates to a data processing system programmed for carrying out the method according to the second aspect.

### Brief Description of the Drawings

Fig. 1 illustrates the clustering of records of a network trace in bursts and sessions according to an embodiment; and
Fig. 2 illustrates the splitting of bursts into sub-bursts according to an embodiment; and
Fig. 3 illustrates the promotion of a burst in a session to a new single session according to an embodiment; and
Fig. 4 illustrates the further splitting of sessions into new different sessions and the characterization of a session by meta-information; and
Fig. 5 illustrates steps executed by a system according to an embodiment.

### Detailed Description of Embodiment(s)

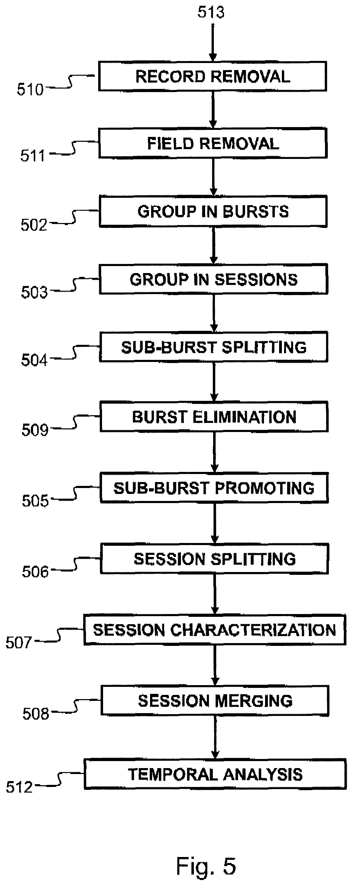

Fig. 5 illustrates steps executed by a system according to an embodiment. As input, a network trace 513 is provided. The network trace 513 may be obtained by network monitoring equipment monitoring a wired or wireless network. The network trace may also be an aggregation of network traces or a subset of a network trace. The network trace comprises records. Each record is indicative for a detected packet or frame on the monitored network. These packets or frames may be related to packets sent over the various OSI layers such as for example MAC layer, IP layer, TCP/UDP layer or more general physical or PHY layer, data link layer, network layer, transport layer, session layer, presentation layer and application layer. Each record comprises at least a time field indicative for when the packet or frame was detected by the network monitoring equipment. The record may further comprise other fields comprising values of meta-information indicative of the properties of the detected packet or frame. These values may be directly copied from the respective packets or frames or may be derived therefrom.

Table 1 below shows an illustrative example of a network trace. Every row except the first one represents a record of the network trace. The first column comprises the time field. The second column comprises the UserID indicative for the user that has sent or received the packet or frame. The third column illustrates the Source IP address and the fourth column the Destination IP address. The last column then shows the size of the intercepted frame or packet.

**Table 1: Example of a network trace with the time field in the first column and meta-information in the second to fifth column**

| Time | UserID | Source IP | Destination IP | Size (kB) |
|---|---|---|---|---|
| 1391098446869 | JohnDoe | 192.168.12.34 | 135.31.211.89 | 512 |
| 1391098447012 | JohnDoe | 192.168.12.34 | 135.31.211.89 | 145 |
| 1391098682989 | Jane Roe | 192.168.12.101 | 65.34.87.11 | 1015 |
| 1391098685077 | JohnDoe | 192.168.12.34 | 192.168.12.101 | 445 |
| 1391098686005 | Jane Roe | 192.168.12.101 | 192.168.12.34 | 763 |
| 1391098688285 | JohnDoe | 192.168.12.34 | 192.168.12.101 | 2033 |

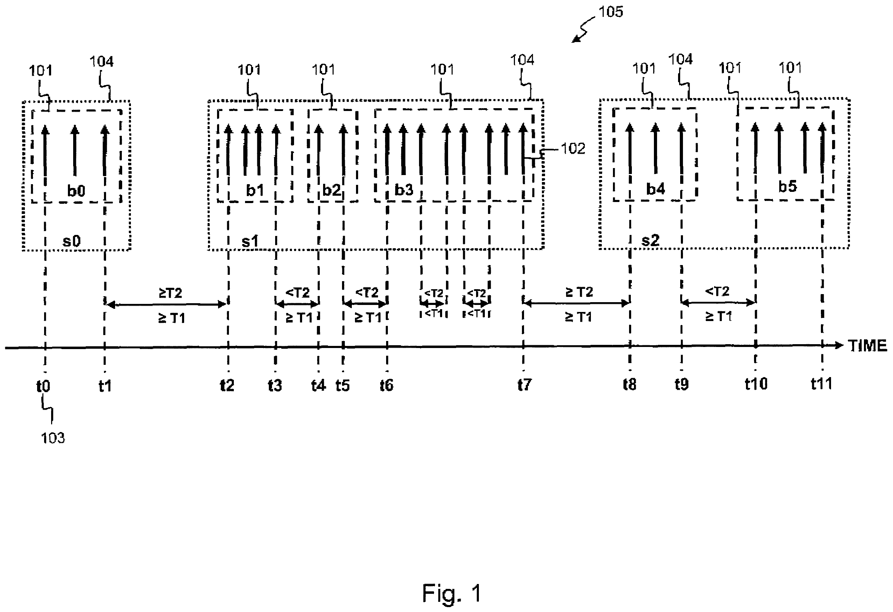

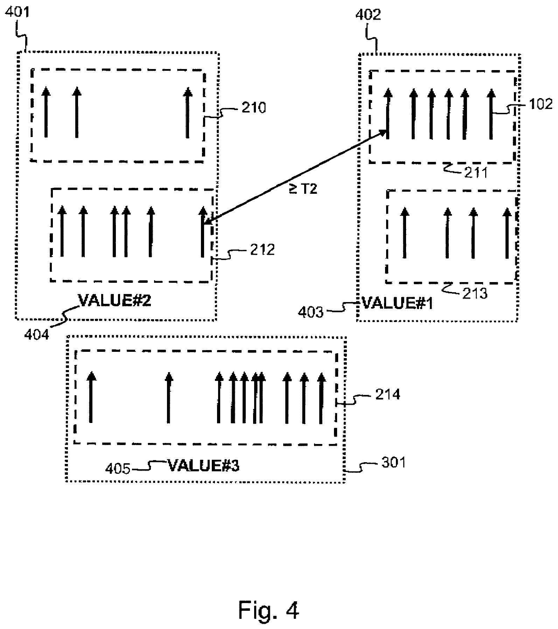

Fig. 1 till Fig. 4 also illustrate such records 102 of a network trace 105 and further illustrates how they are clustered and pre-processed by the steps according to the embodiment of Fig. 5. Every single arrow 102 pointing upwards illustrates a single record 102 of a network trace 105. The order in which they appear from left to right represents the occurrence in time according to the time field in the record.

In a first optional step 510, records may be removed from the network trace. This may be done because they are of no further use for the analysis of the network trace. By this removing, storage space for storing the network trace is saved. When performing the removal, this may be based on one or more of the meta fields storing a value of a certain type of meta-information. The values may be compared with a predetermined value or may be verified according to a regular expression. Also values from different meta fields in a record may be combined in this comparison or regular expression. For example in the case of the network trace of Table 1, only records with a specific Source IP address may be kept or removed. Or records with a Source IP address within a certain address range may be kept or removed.

In a second optional step 511, certain fields may be removed from the records in the network trace. Again, by this removing storage, space for storing the data set and thus the network trace is saved. If a certain field storing a value of a certain type of meta-information is of no further use for the analysis of the network trace, the field is stripped or removed from all records in the network trace.

In a third step 502, the records 102 are grouped or clustered into bursts 101. A burst is related to a short period of network activity on the monitored network. One such a burst 101 comprises one or more records 102 from the network trace. Each record 102 is assigned to one single burst 101. Therefore, the bursts 101 after step 502 are subsequent in time and not overlapping by definition. Records 102 belong to a single burst as long as the time difference between subsequent records is not greater than a predetermined time difference T1. If a time difference between to subsequent records is greater or equal than this predetermined time difference T1, then the records are assigned to different subsequent bursts. This clustering or grouping step 502 is illustrated in Fig. 1. There the records 102 are assigned to the six bursts 101, i.e., bursts b0 comprising records with time fields between t0 and t1, b1 comprising records with time fields between t2 and t3, b2 comprising records with time fields between t4 and t5, b3 comprising records with time fields between t6 and t7, b4 comprising records with time fields between t8 and t9 and b5 comprising records with time fields between t10 and t11.

Then, in the next step 503, each burst and thus the records within the burst is assigned to a session 104. A session 104 thus comprises one or more bursts 102 and a burst 102 can only be assigned to one session 104. Just like the bursts, the sessions 104 are thus subsequent in time and not overlapping by definition after step 503. Two subsequent bursts are assigned to the same session if the time difference between these two bursts is no more than a predetermined time difference T2. The time difference between two subsequent bursts is defined as the time difference between the time field of the first record in the second burst and the time field of the last record in the first burst. Similarly, two subsequent bursts are assigned to a different session, i.e., to subsequent sessions, if the time difference between the two bursts is greater or equal to T2. The clustering and grouping into bursts is also illustrated in Fig. 1 where the bursts 101 are assigned to three different sessions s0, s1 and s2. Bursts b0 and b1 belong to subsequent sessions as the time difference between these two bursts, i.e., t2 - t1, is greater or equal to T2. A session thus also indicates a period of network activity just as the bursts, but the period between the records in a session may be longer. Therefore, T2 is always chosen greater or equal to T1.

After step 502 and 503, the network trace 105 not only comprises records 102, but also comprises an indication to which burst and session each of the records belongs.

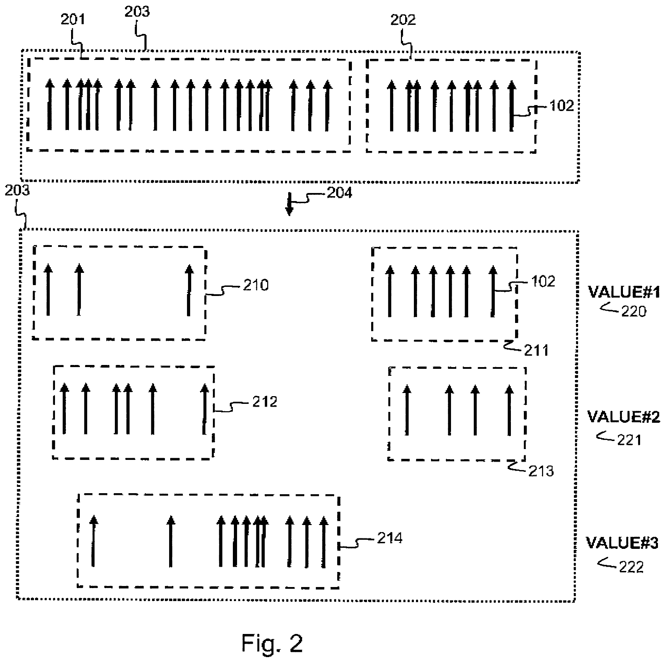

Apart from the time field, the bursts may also be defined according to values of a certain type of meta-information. In the example shown in Table 1, bursts may for example be defined as a period of network activity of a single user, i.e., by packets or frames originating from or being sent to a certain User ID. In order to make this differentiation, the bursts are further split in a next step 504. This is illustrated by Fig. 2 where, after the step 503, a session 203 comprising the bursts 201 and 202 was obtained. Then, in the splitting step 504 - step 204 in Fig. 2 - these two bursts are split into sub-bursts 210 till 214. Burst 201 is split in bursts 210, 212 and 214 and burst 202 is split in bursts 211 and 213. This splitting is performed based on a certain type of meta-information specified in one of the fields of the records. For each value or logical combination of values according to a comparison of regular expression, the records are assigned to a new different sub-burst. In Fig. 2 this is illustrated by splitting the bursts according to three different values VALUE#1 220, VALUE#2 221 and VALUE#3 222. This way, for each value, subsequent non-overlapping sub-bursts are obtained, i.e. a first sequence 210-211 according to value 220, a second sequence 212-213 according to value 221 and a sequence 214 according to value 222. After this splitting step, the sub-bursts 210 till 214 still belong to the same session 203.

Optionally, in the step 509, the effect of spurious network activity may be removed by the elimination of bursts and thus of the records in the bursts. In this step, if a burst is shorter than a predetermined time difference T3, the burst and its records are eliminated from the network trace. In other words, if the time difference between the time field of the last record in a burst and the time field of the first records in a burst is smaller than T3, the burst is eliminated.

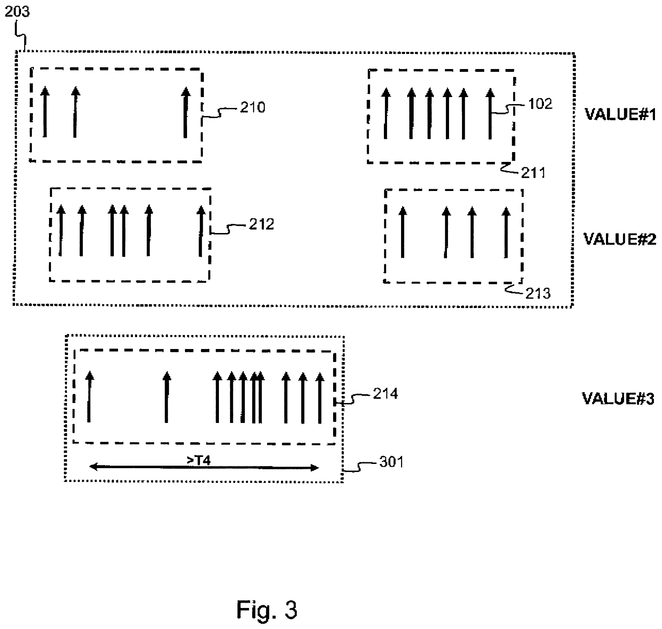

Then, in the next step 505, some of the sub-bursts 210-214 may be promoted to a session based on the length of the sub-burst. When being promoted, the sub-burst is assigned to a new single session and no longer belongs to the previous session. This promoting step 505 is performed when a sub-burst created under step 504 is longer than a predetermined time interval T4. Or, in other words, if the time difference between the time stamp of the last record in the sub-burst and the time stamp of the first record in the sub-burst is longer than this predetermined time interval or difference T4. This promoting step 505 is also illustrated in Fig.3 for the sub-bursts 210-214 as obtained according to Fig. 2. The sub-burst 214 is longer than the predetermined time difference T4. Therefore, the sub-burst 214 is assigned to a new session 301 only comprising the sub-burst 214. The session 203 then no longer comprises the sub-burst 214. Because of this promoting step 505, sessions may overlap.

By the promoting step 505, sessions may no longer validly obey the rule under the clustering step 503 where the time difference between subsequent bursts in a session may be no more than the predetermined time difference T2. Therefore, in the next step 506, sessions may be split into new sessions if by the promoting this time difference between subsequent bursts becomes greater or equal than the predetermined time difference T2. This splitting step 506 is illustrated in Fig. 4 for the updated session 203 obtained in Fig. 3. Due to the promoting, the time difference between the burst 212 and 211 has become greater than T2 and, hence, bursts 211 and 212 should no longer belong to the same session. Therefore, the session 203 is split into two new sessions 401 and 402. Each of these two new sessions comprises sub-bursts according to the values 220 and 221.

If the analysis of a network trace is not only to be based on the timing aspect of the records, i.e. on the clustering in sessions and bursts, but also on the basis of the meta-information comprised in other fields of the records, then every record still needs to be inspected individually to obtain the value of the meta-information of interest. Therefore, in a next step 507, a further characterization of the sessions may be performed. After the step 506, a session may still comprise different parallel sequences of sub-bursts according to a value of a meta-information field in the records. For example, in Fig. 4 the session 401 still comprises a burst 210 with value 220 assigned to its records and a burst 212 with value 221 assigned to its records. Therefore, in the characterization step 507, each session gets a value or label assigned of one of the records in the original sub-bursts. The decision for the value may be based on the amount of records in the session with the label where the session gets the label assigned which occurs the most. Alternatively, any other ranking algorithm may be used.

In other words, in steps 504-506 sessions are created comprising parallel sequences of sub-burst where each sequence in a session is characterized by a certain value of a type of meta-information occurring in one of the fields of the records. In step 507, the session itself is then characterized by one of these values. By this characterization, during later analysis of the network trace, it may no longer be needed to inspect the records individually but only inspect the property of the session defined by the assigned value.

In Fig. 4 the characterization step is further illustrated. There the session 401 gets the value VALUE#2 404 assigned corresponding to the VALUE#2 221 of the records in the sub-burst 212. Similarly, the session 402 gets the value VALUE#1 403 assigned corresponding to the value VALUE#1 220 in the sub-burst 211. As the session 301 only comprises a burst with records comprising VALUE# 222, the session gets this value assigned as 405.

Due to the characterization step 507 and the splitting- 504 and promoting step 505 it may occur that session are overlapping and also have the same value or label assigned to them, i.e., are characterized by the same value and overlapping. In this case, these sessions are merged again into a single session in step 508.

After step 508, one or more sequences of non-overlapping sessions is obtained whereby all sessions in a single sequence are characterized by the same value. The network trace is thus pre-processed according to the timing aspect of the network trace. The network trace does not only comprise single records, but also bursts and sessions. The sessions may, optionally, further be characterized by a certain value corresponding to a type of meta-information assigned to one of the fields in the records. By this representation of a network trace, it can be further processed in the step 512 by standard Big Data Analytics techniques such as the Map-Reduce methodology without specific customizations incorporating the timing aspects of the network trace.

According to an embodiment the steps described above may further be implemented on a computing system comprising one or more processors. This may be done by compiling one or more of the above steps into a computer executable program comprising instructions performing the steps of Figure 5 when the instructions are ran on a processor. Such a computing system may be a single device comprising one or more processors or may be a plurality of devices each comprising one or more processors. Such a plurality of devices do not need to be located in the same location but may be spaced apart and interconnected by a computer network infrastructure.

### Examples

Below, some examples are given where a network trace is pre-processed according to some or all of the step illustrated by Fig. 5 and the embodiment given above.

### Example 1

According to a first example, the steps according to the embodiment above are used to identify the behaviour of a user. For this purpose, all the networking packets originating and sent from and to the user's browsing application were tracked and recorded into a network trace. The records are also tagged according to the destination website specified in the records, these websites are classified into different types of activities such as for example Online Shopping, Music, Gaming Social Network and Blogging. This classification is applied as a field of meta-information to all of the records. Also more sophisticated algorithms for tagging network traffic may be used such as using a neighbourhood matrix.

In the step 510, all records are removed from the trace that do not correspond to user generated network traffic such as for example packets originating from Ajax scripts that track the user or packets originating from advertisement.

Then, the records each having a timing field and a field according to the type of activity are further grouped into bursts and sessions according to steps 502 and 503 using a time interval T1 of 31 seconds and a time interval T2 of 10 minutes. Then, sub-bursts splitting 504 is performed based on the type of activity. Spurious bursts are then removed in step 509 by choosing the minimal length of bursts and thus T3 as two seconds. The sub-burst promoting 505 then uses a time difference T4 equal to 4 minutes to promote some of the bursts to sessions.

Then, during session characterization 507, any aggregation algorithm may be applied to tag the sessions with the activity type that is the prevalent tag in the bursts it contains.

Now, the network trace is pre-processed and the actual data analysis 512 may be performed. For example by expanding, for each user, the number of sessions of any given type that are active for each minute of the day. Different days may be divided into weekend days and working week days, and, at every minute of the weekend day or working week day an average may be calculated of the number of active sessions of a given type. For instance, a given user could have on average 2.5 Online Gaming sessions and 1 Social Networking session active at 12:41 during weekend days. The end result is that it is now possible to study the behaviour of any user over time.

Another form of analysis that may be performed on the pre-processed data is to classify a user based on his prevalent type of activity into a light, medium and heavy user for each different type of activity. For example, a certain user may be a heavy user in the Gaming activity but a light user in Online Music. This knowledge about a user allows network operators to offer subsidized content as part of their commercial offering.

In yet another form of analysis, sessions may be grouped according to which part of the day they belong, e.g. morning, afternoon, evening and night. This provides for each user and for each activity type the "density" of each part of the day, wherein density is defined as the ratio between the sessions of a given activity type of a given user that happen in a distinct part of the day and the total number of sessions of the same user of the same activity type. For instance, a given user might have 10% of his/her gaming sessions in the morning, 30% in the afternoon, 35% in the evening and 25% in the night. Moreover, the records may also comprise a location field, allowing sessions of different activity types to be geo-located. Spatial and temporal analysis of this kind allows network operators to more effectively manage their network operations based on the knowledge of the typical activities of their users. For instance, it becomes possible to allocate the bandwidth to the users connected to the same base station in non-equal amounts without having them noticing. For instance, if the same base station, on a given evening, is serving a user that is a heavy online movie user during evenings, and another user that is an social network light user during the same part of the day, it is then possible to divide the base station capacity in non-equal parts, giving the movie user higher bandwidth, thus enhancing her/his user experience without sacrificing the user experience of the social network user. Moreover, this may be done without recurring to content inspection, which could in fact violate privacy and network neutrality rules and regulations.

### Example 2

Pre-processed network traces by the steps according to the above embodiments may be used to detect network failures in a wireless network. In the field removal step 511, only fields related to user presence, connection time and base-station ID or identification are kept in the records of the network trace. In this example the predetermined time difference T1 is set to 30 seconds as this is the default timeout time for many network protocols. T2 can be more arbitrary, but since the objective is to characterize each session with a base-station ID, this time should be carefully chosen so that there aren't many base-station switches for a given user. A time difference T2 of 2-3 minutes would fit for commuting/mobile users. A larger value, e.g. 10 minutes, may still be tolerated for non-moving users. In this example, T3 may be used to eliminate spurious noise and set to a few seconds. In this example, the value of T4 is of no real importance and is therefore set high enough. The pre-processed network trace after step 509 then comprises sessions characterized by step 507 by the base-station ID indicative for the base station where most of the activity was recorded.

During the analysis, the pre-processed data is then used to identify faults just by counting how many sessions each base station handles over time. A fault can be detected if the number of sessions with a given base-station ID drops suddenly. Moreover, it is possible to study the frequency of these drops and use a data mining system to assess if there is a pattern in the drops of a given base station, or if these drops happen simultaneously, or with a pattern, across multiple base stations. By characterizing sessions with other base-station details, like the model-id, it is possible to assess if there are fault patterns that affect only a specific model.

Another form of analysis that may be performed on this pre-processed data is analysing the performance of the base stations. The objective here is to have each session labelled as "good" if the amount of lost packets is below a certain threshold L, and "bad" otherwise. Again, each session is also characterized by the base-station ID. Lost packets are identified in the records before pre-processing by counting the number of TCP re-transmissions and labelling each IP packet and thus records in the network trace as "good" if it is part of the first L re-transmissions, and "bad" otherwise. The output of the step 508 now comprises for each session not only the base-station ID, but also if it was a "good" one or not. In the further analysis on the pre-processed data it is patterns of base-station activity are then looked at by looking under which circumstances the number of "bad" sessions increases. By adding extra contextual information in the session characterization it is possible to extend the analysis to other causes as well. For instance, by adding a "Content-Type" label to sessions, it is possible to determine if there are contents that are more affected by "bad" sessions than others.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for clustering a plurality of select subsequent records (102) of a network trace (105); said records (102) comprising a time field storing a time stamp (103); said system being further configured to perform the following steps:
- group (502) said records (102) into a sequence of bursts (101); wherein a difference between said time stamp of two subsequent records within a burst is no more than a predetermined time difference T1; and wherein a difference between said time stamp of two subsequent records of subsequent bursts is equal to or more than said predetermined time difference T1;
further **characterized in that** said system is further configured to perform the following steps:
- group (503) said bursts (101) into a sequence of sessions (104); wherein a difference between said time stamp of two subsequent records belonging to subsequent bursts of a same session is no more than a predetermined time difference T2; and wherein a difference between said time stamp of subsequent records belonging to subsequent bursts of subsequent sessions is equal to or more than said predetermined time difference T2;
wherein T2 is greater or equal to T1; and wherein said records (102) further comprise a first meta field storing a value (220, 221, 222) of a first type of meta-information; and wherein said system is further configured to perform the following steps:
- splitting (204, 504) a first burst (201, 202) belonging to a first session (203) into sub-bursts (210-214) according to said value (220, 221, 222) of said first type of meta-information; and
- promoting (505) a sub-burst (214) of said sub-bursts to a promoted session (301) if a time difference between said time stamp of a first and last record of said sub-burst is greater than a predetermined time difference T4; and
- if by said promoting within said first session a time difference between a last record in a first sub-burst and a first record of a second subsequent sub-burst is greater than said predetermined time difference T2, then splitting (506) said first session (203) thereby obtaining two new subsequent sessions (401, 402).

2. A system according to claim 1 further being configured to perform the following steps:
- characterize (507) said first and promoted session by a predominant value (403, 404, 405) of said first type of meta-information stored in records of each respective session (402, 401, 301 );
- merge (508) said promoted session with another session of said sessions if said promoted session and said another session are overlapping in time and are **characterized by** a same predominant value of said first type of meta-information.

3. A system according to claim 1 further being configured to perform the following step:
- if a short sub-burst of said sub-bursts comprises a time difference between a first and last record of said short sub-burst smaller than a predetermined time difference T3, then eliminate (509) said short sub-burst.

4. A system according to claim 1 wherein said records further comprise a second meta field storing a value of a second type of meta-information; and wherein said system is further being configured to perform the following step:
- remove (510) undesired records from said network trace (105) identified by said second type of meta-information.

5. A system according to claim 1 wherein said records further comprise a third meta field storing a value of a third type of meta-information; and wherein said system is further being configured to perform the following step:
- remove (511) said third meta field from all said records.

6. A method for clustering a plurality of subsequent records (102) of a network trace (105); said records (102) comprising a time field storing a time stamp (103); said method comprising the following steps:
- grouping (502) said records (102) into a sequence of bursts (101); and wherein a difference in said time stamp of two subsequent records within a burst is no more than a predetermined time difference T1; and wherein a difference in time stamp of two subsequent records between subsequent bursts is equal or more than said predetermined time difference T1;
further **characterized in that** said method further comprises the following steps:
- grouping (503) said bursts (101) into a sequence of sessions (104); and wherein a difference between said time stamp of two subsequent records belonging to subsequent bursts of a same session is no more than a predetermined time difference T2; and wherein a difference between said time stamp of subsequent records belonging to subsequent bursts of subsequent sessions is equal or more than said predetermined time difference T2; and
wherein T2 is greater or equal to T1; and wherein said records (102) further comprise a first meta field storing a value (220, 221, 222) of a first type of meta-information; and wherein said method further comprises the following steps:
- splitting (204, 504) a first burst (201, 202) belonging to a first session (203) into sub-bursts (210-214) according to said value (220, 221, 222) of said first type of meta-information; and
- promoting (505) a sub-burst (214) of said sub-bursts to a promoted session (301) if a time difference between said time stamp of a first and last record of said sub-burst is greater than a predetermined time difference T4; and
- if by said promoting within said first session a time difference between a last record in a first sub-burst and a first record of a second subsequent sub-burst is greater than said predetermined time difference T2, then splitting (506) said first session (203) thereby obtaining two new subsequent sessions (401, 402).

7. A computer program product comprising computer-executable instructions for performing the method according to claim 6 when the program is run on a computer.

8. A computer readable storage medium comprising the computer program product according to claim 7.

9. A data processing system programmed for carrying out the method according to claim 6.

## Patentansprüche

1. System zum Bündeln einer Vielzahl von ausgewählten aufeinander folgenden Protokollen (102) einer Netzwerkablaufverfolgung (105); wobei die besagten Protokolle (102) ein Zeitfeld umfassen, in dem ein Zeitstempel (103) gespeichert ist; wobei das besagte System weiterhin ausgelegt ist, um die folgenden Schritte durchzuführen:
- Gruppieren (502) der besagten Protokolle (102) in eine Sequenz von Bursts (101); wobei eine Differenz zwischen dem besagten Zeitstempel von zwei aufeinander folgenden Protokollen innerhalb eines Bursts nicht mehr als eine vorausbestimmte Zeitdifferenz T1 ist; und wobei eine Differenz zwischen dem besagten Zeitstempel von zwei aufeinander folgenden Protokollen von aufeinander folgenden Bursts gleich oder größer als die besagte vorausbestimmte Zeitdifferenz T1 ist;
weiterhin **dadurch gekennzeichnet, dass** das besagte System weiterhin ausgelegt ist, um die folgenden Schritte durchzuführen:
- Gruppieren (503) der besagten Bursts (101) in eine Sequenz von Sitzungen (104); wobei eine Differenz zwischen dem besagten Zeitstempel von zwei aufeinander folgenden Protokollen, die zu aufeinander folgenden Bursts einer gleichen Sitzung gehören, nicht mehr als eine vorausbestimmte Zeitdifferenz T2 ist; und wobei eine Differenz zwischen dem besagten Zeitstempel von aufeinander folgenden Protokollen, die zu aufeinander folgenden Bursts von aufeinander folgenden Sitzungen gehören, gleich oder größer als die besagte vorausbestimmte Zeitdifferenz T2 ist;
wobei T2 größer oder gleich T1 ist; und wobei die besagten Protokolle (102) weiterhin ein erstes Metadatenfeld umfassen, in dem ein Wert (220, 221, 222) einer ersten Art von Metainformationen gespeichert ist; und wobei das besagte System weiterhin ausgelegt ist, um die folgenden Schritte durchzuführen:
- Aufspalten (204, 504) eines ersten Bursts (201, 202), der zu einer ersten Sitzung (203) gehört, in Teil-Bursts (210-214) gemäß dem besagten Wert (220, 221, 222) der besagten ersten Art von Metainformationen; und
- Befördern (505) eines Teil-Bursts (214) der besagten Teil-Bursts zu einer beförderten Sitzung (301), wenn eine Zeitdifferenz zwischen dem besagten Zeitstempel eines ersten und letzten Protokolls des besagten Teil-Bursts größer ist als eine vorausbestimmte Zeitdifferenz T4; und
- wenn durch das besagte Befördern innerhalb der besagten ersten Sitzung eine Zeitdifferenz zwischen einem letzten Protokoll in einem ersten Teil-Burst und einem ersten Protokoll eines zweiten aufeinander folgenden Teil-Bursts größer ist als die besagte vorausbestimmte Zeitdifferenz T2, dann Aufspalten (506) der besagten ersten Sitzung (203), wobei zwei neue aufeinander folgende Sitzungen (401, 402) erhalten werden.

2. System nach Anspruch 1, weiterhin ausgelegt, um die folgenden Schritte durchzuführen:
- Kennzeichnen (507) der besagten ersten und beförderten Sitzung durch einen vorherrschenden Wert (403, 404, 405) aus der besagten ersten Art von Metainformationen, die in Protokollen von jeder jeweiligen Sitzung (402, 401, 301) gespeichert sind;
- Zusammenführen (508) der besagten beförderten Sitzung mit einer anderen Sitzung der besagten Sitzungen, wenn sich die besagte beförderte Sitzung und die besagte andere Sitzung zeitmäßig überschneiden und durch einen gleichen vorherrschenden Wert aus der besagten ersten Art von Metainformationen gekennzeichnet sind.

3. System nach Anspruch 1, weiterhin ausgelegt, um den folgenden Schritt durchzuführen:
- wenn ein kurzer Teil-Burst der besagten Teil-Bursts eine Zeitdifferenz zwischen einem ersten und letzten Protokoll des besagten kurzen Teil-Bursts umfasst, die kleiner ist als eine vorausbestimmte Zeitdifferenz T3, dann Eliminieren (509) des besagten kurzen Teil-Bursts.

4. System nach Anspruch 1, wobei die besagten Protokolle weiterhin ein zweites Metafeld umfassen, in dem ein Wert einer zweiten Art von Metainformationen gespeichert ist; und wobei das besagte System weiterhin ausgelegt ist, um den folgenden Schritt durchzuführen:
- Entfernen (510) unerwünschter Protokolle aus der besagten Netzwerkablaufverfolgung (105), die durch die besagte zweite Art von Metainformationen identifiziert werden.

5. System nach Anspruch 1, wobei die besagten Protokolle weiterhin ein drittes Metafeld umfassen, in dem ein Wert einer dritten Art von Metainformationen gespeichert ist; und wobei das besagte System weiterhin ausgelegt ist, um den folgenden Schritt durchzuführen:
- Entfernen (511) des besagten dritten Metafelds aus allen besagten Protokollen.

6. Verfahren zum Bündeln einer Vielzahl von aufeinander folgenden Protokollen (102) einer Netzwerkablaufverfolgung (105); wobei die besagten Protokolle (102) ein Zeitfeld umfassen, in dem ein Zeitstempel (103) gespeichert ist; wobei das besagte Verfahren die folgenden Schritte umfasst:
- Gruppieren (502) der besagten Protokolle (102) in eine Sequenz von Bursts (101); und wobei eine Differenz zwischen dem besagten Zeitstempel von zwei aufeinander folgenden Protokollen innerhalb eines Bursts nicht mehr als eine vorausbestimmte Zeitdifferenz T1 ist; und wobei eine Differenz im Zeitstempel von zwei aufeinander folgenden Protokollen zwischen aufeinander folgenden Bursts gleich oder größer als die besagte vorausbestimmte Zeitdifferenz T1 ist;
weiterhin **dadurch gekennzeichnet, dass** das besagte Verfahren weiterhin die folgenden Schritte umfasst:
- Gruppieren (503) der besagten Bursts (101) in eine Sequenz von Sitzungen (104); und wobei eine Differenz zwischen dem besagten Zeitstempel von zwei aufeinander folgenden Protokollen, die zu aufeinander folgenden Bursts einer gleichen Sitzung gehören, nicht mehr als eine vorausbestimmte Zeitdifferenz T2 ist; und wobei eine Differenz zwischen dem besagten Zeitstempel von aufeinander folgenden Protokollen, die zu aufeinander folgenden Bursts von aufeinander folgenden Sitzungen gehören, gleich oder größer als die besagte vorausbestimmte Zeitdifferenz T2 ist; und
wobei T2 größer oder gleich T1 ist; und wobei die besagten Protokolle (102) weiterhin ein erstes Metadatenfeld umfassen, in dem ein Wert (220, 221, 222) einer ersten Art von Metainformationen gespeichert ist; und wobei das besagte Verfahren weiterhin die folgenden Schritte umfasst:
- Aufspalten (204, 504) eines ersten Bursts (201, 202), der zu einer ersten Sitzung (203) gehört, in Teil-Bursts (210-214) gemäß dem besagten Wert (220, 221, 222) der besagten ersten Art von Metainformationen; und
- Befördern (505) eines Teil-Bursts (214) der besagten Teil-Bursts zu einer beförderten Sitzung (301), wenn eine Zeitdifferenz zwischen dem besagten Zeitstempel eines ersten und letzten Protokolls des besagten Teil-Bursts größer ist als eine vorausbestimmte Zeitdifferenz T4; und
- wenn durch das besagte Befördern innerhalb der besagten ersten Sitzung eine Zeitdifferenz zwischen einem letzten Protokoll in einem ersten Teil-Burst und einem ersten Protokoll eines zweiten aufeinander folgenden Teil-Bursts größer ist als die besagte vorausbestimmte Zeitdifferenz T2, dann Aufspalten (506) der besagten ersten Sitzung (203), wobei zwei neue aufeinander folgende Sitzungen (401, 402) erhalten werden.

7. Computerprogrammprodukt, umfassend computerausführbare Anweisungen zum Durchführen des Verfahrens nach Anspruch 6, wenn das Programm auf einem Computer läuft.

8. Computerlesbares Speichermedium, umfassend das Computerprogrammprodukt nach Anspruch 7.

9. Datenverarbeitungssystem, das zum Ausführen des Verfahrens nach Anspruch 6 programmiert ist.

## Revendications

1. Système pour mettre en grappe une pluralité d'enregistrements subséquents de sélection (102) d'une trace de réseau (105) ; lesdits enregistrements (102) comprenant un champ de temps stockant une estampille temporelle (103) ; ledit système étant en outre configuré pour effectuer les étapes suivantes :
- regrouper (502) lesdits enregistrements (102) en une séquence de rafales (101) ; une différence entre ladite estampille temporelle de deux enregistrements subséquents à l'intérieur d'une rafale n'étant pas supérieure à une différence de temps prédéterminée T1 ; et une différence entre ladite estampille temporelle de deux enregistrements subséquents de rafales subséquentes étant égale ou supérieure à ladite différence de temps prédéterminée T1 ;
en outre **caractérisé en ce que** ledit système est en outre configuré pour effectuer les étapes suivantes :
- regrouper (503) lesdites rafales (101) en une séquence de sessions (104); une différence entre ladite estampille temporelle de deux enregistrements subséquents appartenant à des rafales subséquentes d'une même session n'étant pas supérieure à une différence de temps prédéterminée T2 ; et une différence entre ladite estampille temporelle d'enregistrements subséquents appartenant à des rafales subséquentes de sessions subséquentes étant égale ou supérieure à ladite différence de temps prédéterminée T2,
T2 étant supérieure ou égale à T1 ; et lesdits enregistrements (102) comprenant en outre un premier champ de méta stockant une valeur (220, 221, 222) d'un premier type de méta-informations ; et ledit système étant en outre configuré pour effectuer les étapes suivantes :
- séparer (204, 504) une première rafale (201, 202) appartenant à une première session (203) en sous-rafales (210-214) en fonction de ladite valeur (220, 221, 222) dudit premier type de méta-informations ; et
- promouvoir (505) une sous-rafale (214) desdites sous-rafales à une session promue (301) si une différence de temps entre ladite estampille temporelle d'un premier et d'un dernier enregistrement de ladite sous-rafale est supérieure à une différence de temps prédéterminée T4 ; et
- si par ladite promotion à l'intérieur de ladite première session, une différence de temps entre un dernier enregistrement dans une première sous-rafale et un premier enregistrement d'une deuxième sous-rafale subséquente est supérieure à ladite différence de temps prédéterminée T2, séparer (506) alors ladite première session (203), obtenant ainsi deux nouvelles sessions subséquentes (401, 402).

2. Système selon la revendication 1, étant en outre configuré pour effectuer les étapes suivantes :
- caractériser (507) ladite première et la session promue par une valeur prédominante (403, 404, 405) dudit premier type de méta-informations stockées dans des enregistrements de chaque session respective (402, 401, 301) ;
- fusionner (508) ladite session promue avec une autre session desdites sessions si ladite session promue et ladite une autre session se chevauchent dans le temps et sont **caractérisées par** une même valeur prédominante dudit premier type de méta-informations.

3. Système selon la revendication 1, étant en outre configuré pour effectuer l'étape suivante :
- si une sous-rafale courte desdites sous-rafales comprend une différence de temps entre un premier et un dernier enregistrement de ladite sous-rafale courte inférieure à une différence de temps prédéterminée T3, éliminer (509) alors ladite sous-rafale courte.

4. Système selon la revendication 1, dans lequel lesdits enregistrements comprennent en outre un deuxième champ de méta stockant une valeur d'un deuxième type de méta-informations ; et ledit système étant en outre configuré pour effectuer l'étape suivante :
- supprimer (510) des enregistrements non souhaités de ladite trace de réseau (105) identifiée par ledit deuxième type de méta-informations.

5. Système selon la revendication 1, dans lequel lesdits enregistrements comprennent en outre un troisième champ de méta stockant une valeur d'un troisième type de méta-informations ; et ledit système étant en outre configuré pour effectuer l'étape suivante :
- supprimer (511) ledit troisième champ de méta de tous lesdits enregistrements.

6. Procédé pour mettre en grappe une pluralité d'enregistrements subséquents (102) d'une trace de réseau (105); lesdits enregistrements (102) comprenant un champ de temps stockant une estampille temporelle (103); ledit procédé comprenant les étapes suivantes :
- regrouper (502) lesdits enregistrements (102) en une séquence de rafales (101) ; et une différence dans ladite estampille temporelle de deux enregistrements subséquents à l'intérieur d'une rafale n'étant pas supérieure à une différence de temps prédéterminée T1 ; et une différence dans une estampille temporelle de deux enregistrements subséquents entre des rafales subséquentes étant égale ou supérieure à ladite différence de temps prédéterminée T1 ;
en outre **caractérisé en ce que** ledit procédé comprend en outre les étapes suivantes :
- regrouper (503) lesdites rafales (101) en une séquence de sessions (104) ; et une différence entre ladite estampille temporelle de deux enregistrements subséquents appartenant à des rafales subséquentes d'une même session n'étant pas supérieure à une différence de temps prédéterminée T2 ; et une différence entre ladite estampille temporelle d'enregistrements subséquents appartenant à des rafales subséquentes de sessions subséquentes étant égale ou supérieure à ladite différence de temps prédéterminée T2 ; et
T2 étant supérieure ou égale à T1 ; et lesdits enregistrements (102) comprenant en outre un premier champ de méta stockant une valeur (220, 221, 222) d'un premier type de méta-informations ; et ledit procédé comprenant en outre les étapes suivantes :
- séparer (204, 504) une première rafale (201, 202) appartenant à une première session (203) en sous-rafales (210-214) en fonction de ladite valeur (220, 221, 222) dudit premier type de méta-informations ; et
- promouvoir (505) une sous-rafale (214) desdites sous-rafales à une session promue (301) si une différence de temps entre ladite estampille temporelle d'un premier et d'un dernier enregistrement de ladite sous-rafale est supérieure à une différence de temps prédéterminée T4 ; et
- si par ladite promotion à l'intérieur de ladite première session, une différence de temps entre un dernier enregistrement dans une première sous-rafale et un premier enregistrement d'une deuxième sous-rafale subséquente est supérieure à ladite différence de temps prédéterminée T2, séparer (506) alors ladite première session (203), obtenant ainsi deux nouvelles sessions subséquentes (401, 402).

7. Produit de programme informatique comprenant des instructions exécutables par ordinateur pour effectuer le procédé selon la revendication 6 lorsque le programme est exécuté sur un ordinateur.

8. Support de stockage lisible par ordinateur comprenant le produit de programme informatique selon la revendication 7.

9. Système de traitement de données programmé pour réaliser le procédé selon la revendication 6.
